# EUROPÄISCHE PATENTSCHRIFT

(11) **EP 2 466 337 B1**
(45) Veröffentlichungstag und Bekanntmachung des Hinweises auf die Patenterteilung: **12.08.2015**
(21) Anmeldenummer: 10015845.0
(22) Anmeldetag: 20.12.2010
(51) Int. Cl.: G01T 1/208, G01T 1/29

(54) **Vorrichtung zum Auslesen von in einer Speicherleuchstoffschicht gespeicherten Röntgeninformationen und elektrische Schaltung**
Device and method for reading out x-ray information stored in a storage phosphor layer and electrical circuit
Dispositif de lecture d'informations radiographiques stockées sur une couche fluorescente de mémoire et circuit électrique

(43) Veröffentlichungstag der Anmeldung: 20.06.2012
(73) Patentinhaber: Agfa HealthCare N.V., 2640 Mortsel (BE)
(72) Erfinder: Nitsche, Werner, 82008 Unterhaching (DE); Schuster, Rainer, 82291 Mammendorf (DE)
(74) Vertreter: Linsmeier, Josef

(56) Entgegenhaltungen:
- EP-A1- 0 224 248
- DE-A1- 4 215 092
- US-A- 5 512 755
- US-B1- 7 005 625

## Beschreibung

Die Erfindung betrifft ein Photomultipliermodul gemäß dem Oberbegriff des unabhängigen Anspruchs.

Eine Möglichkeit zur Aufzeichnung von Röntgenbildern besteht darin, die durch ein Objekt, beispielsweise einen Patienten, hindurch tretende Röntgenstrahlung als latentes Bild in einer so genannten Speicherleuchtstoffschicht zu speichern. Zum Auslesen des latenten Bildes wird die Speicherleuchtstoffschicht mit Stimulationslicht bestrahlt und dabei zur Aussendung von Emissionslicht angeregt. Das Emissionslicht, dessen Intensität dem in der Speicherleuchtstoffschicht gespeicherten Bild entspricht, wird von einem optischen Detektor erfasst und in elektrische Signale umgewandelt. Die elektrischen Signale werden nach Bedarf weiterverarbeitet und schließlich für eine Auswertung, insbesondere zu medizinisch-diagnostischen Zwecken, bereitgestellt, indem sie an einem entsprechenden Ausgabegerät, wie z. B. einem Monitor oder Drucker, ausgegeben werden.

Zum Erfassen des in der Speicherleuchtstoffschicht angeregten Emissionslichts werden u.a. Photomultiplier (PMT) eingesetzt, welche im Wesentlichen eine Elektronenröhre mit einer Photokathode, einer Anode und einem Sekundärelektronenvervielfacher mit mehreren Dynoden umfassen und zur Erfassung und Verstärkung schwacher Lichtsignale besonders geeignet sind. Die unterschiedlichen chen Dynoden des Photomultipliers werden üblicherweise über einen Spannungsteiler mit unterschiedlich großen Teilspannungen versorgt.

Hierzu werden häufig passive Spannungsteilerschaltungen verwendet, bei denen eine Eingangsspannung durch entsprechend verschaltete ohmsche Widerstände in entsprechende Teilspannungen aufgeteilt wird. Bei einer solchen Beschaltung der Dynoden stellt sich in der Regel eine nichtlineare Kennlinie des Photomultipliers ein, weil eine Stromänderung aufgrund unterschiedlich hohen Lichteinfalls eine Spannungsänderung am Spannungsteiler zur Folge hat, was wiederum eine Änderung der Teilspannungen an den Dynoden und damit eine Veränderung der Verstärkung des Photomultipliers bewirkt. Darüber hinaus können bei Schaltungen dieses Typs z.T. hohe Verlustleistungen auftreten, die z.B. zu Hitzeentwicklung bzw. Kühlproblemen führen könnten.

Grundsätzlich können zur Spannungsteilung auch aktive Spannungsteilerschaltungen mit entsprechend verschalteten Hochspannungstransistoren verwendet werden. Augrund der zur Stabilisierung der Dynodenspannungen erforderlichen relativ großen Anzahl von Hochspannungstransistoren sind solche Schaltungen relativ aufwändig im Aufbau und teuer.

Aus EP 0 224 248 A1 ist eine Vorrichtung zum Auslesen von stimulierbaren Phosphorschichten bekannt, bei welcher das von der Phosphorschicht emittierte Licht mit einem Photomultiplier erfasst wird.

US 7,005,625 B1 zeigt einen Spannungsteiler, bei welchem die Kollektor-Emitter-Spannungen von Transistoren auf einen vorgegebenen Wert gesetzt werden, um Sättigungseffekte in den zugehörigen Dynoden eines Photomultipliers zu vermeiden.

DE 42 15 092 A1 zeigt einen Photomultiplier, bei welchem die Spannung zwischen der Kathode und der ersten Dynode sowie zwischen der ersten und zweiten Dynode durch jeweils eine unabhängige variable Spannungsquelle erzeugt wird.

Es ist Aufgabe der vorliegenden Erfindung, eine Vorrichtung sowie eine entsprechende elektrische Schaltung anzugeben, welche bei möglichst einfachem Aufbau eine geringe Verlustleistung aufweist.

Die Aufgabe wird durch das Photomultipliermodul bzw... die Vorrichtung gemäß den Ansprüchen 1 bzw. 2 gelöst.

Das erfindungsgemäße Photomultipliermodul umfasst einen Photomultiplier, welcher zum Erfassen von Licht und zum Umwandeln des erfassten Lichts in ein Ausgangssignal ausgebildet ist und eine oder mehrere Elektroden aufweist, und eine elektrische Schaltung zur Beschaltung des Photomultipliers mit einem Spannungsteiler zur Erzeugung unterschiedlicher Teilspannungen, mit welchen die Elektroden, insbesondere die Kathode und die Dynoden, des Photomul-tipliers beaufschlagt werden, aus zwei oder mehreren unterschiedlichen Eingangsspannungen, welche am Spannungsteiler anliegen.

Die Erfindung basiert auf dem Ansatz, den Spannungsteiler so auszugesfalten, dass dieser von außen mit mehreren unterschiedlich großen Eingangsspannungen beaufschlagt werden kann, die mittels aktiver und/oder passiver Spartnungsteilerelemente, wie z.B. Transistoren bzw. ohmscher Widerstände, auf die einzelnen. Elektroden des Photomultipliers verteilt werden können.

Auf diese Weise,wird dem Umstand Rechnung getragen, dass der Photomultiplier bei Dynoden mit kleinen Spannungen deutlich mehr Strom benötigt als bei Dynoden mit höheren Spannungen: Durch die Erfindung ist es nun möglich, nur diejenigen Dynoden des Photomultipliers mit einer hohen Eingangsspannung zu versorgen, die eine hohe Spannung benötigen. Andere Dynoden mit niedrigeren Spannungen werden mit einer weniger hohen Eingangsspannung versorgt. Dadurch fließt bei den hohen Spannungen wenig Strom und bei den niedrigeren Spannungen mehr Strom.

Im Unterschied zu einer Spannungsteilerschaltung, bei welcher lediglich eine Eingangsspannung auf unterschiedliche Dynoden verteilt wird und somit nur ein - relativ großer- Gesamtstrom durch die Schaltung fließt, fließen bei der erfindungsgemäßen Spannungsteilerschaltung bei höheren Spannungen deutlich kleinere Ströme, was Verlustleistungen vermindert und damit den Wirkungsgrad der Spannungsversorgung signifikant erhöht. Darüber hinaus wird der Bedarf an aktiven Bauelementen, wie z.B. Transistoren, gegenüber rein aktiven Spannungsteilerschaltungen deutlich reduziert und damit ein einfacher Aufbau erreicht.

Erfindungsgemäß weist der Spannungsteiler mindestens ein Widerstandselement auf, dessen elektrischer Widerstand durch eine erste Eingangsspannung gesteuert wird und über welches mindestens eine von der ersten Eingangsspannung verschiedene zweite Eingangsspannung zumindest einer der Elektroden zugeführt wird. Als Widerstandselement wird vorzugsweise ein Transistor verwendet, dessen Widerstand bzw. Verstärkungsfaktor durch die Höhe der ersten Eingangsspannung gesteuert wird, so dass die zweite Eingangsspannung in Abhängigkeit von der Größe der anliegenden ersten Eingangsspannung auf eine oder mehrere Elektroden des Photomultipliers verteilt wird. Auf diese Weise kann erreicht werden, dass bei der ersten Eingangsspannung ein nur sehr kleiner Strom fließt, wodurch etwaige Verlustleistungen stark reduziert werden. Darüber hinaus ist es bei solchen kleinen Strömen möglich, diese mit einem entsprechend kleineren und einfacher aufgebauten Filter zu sieben, wodurch bei vereinfachtem Aufbau eine hohe Linearität des Photomultipliers erreicht wird.

Insbesondere ist hierbei die mindestens eine zweite Eingangsspannung kleiner ist als die erste Eingangsspannung. Die vorstehend erwähnten Vorteile kommen auf dieser Weise besonders zur Geltung.

Erfindungsgemäß liegt die erste Eingangsspannung an einer ersten Elektrode, vorzugsweise an der Kathode, des Photomultipliers an. Hierdurch wird eine besonders günstige Verstärkung der erzeugten Sekundärelektronen erreicht.

In einer weiteren bevorzugten Ausführung ist eine Spannungsquelle zur Erzeugung der zwei oder mehreren unterschiedlichen Eingangsspannungen, die am Spannungsteiler anliegen, vorgesehen. Insbesondere weist die Spannungsquelle hierbei einen Spannungsvervielfacher auf, welcher eine am Spannungsvervielfacher anliegende Wechselspannung in die zwei oder mehreren unterschiedlichen Eingangsspannungen umwandelt. Die Verwendung eines solchen Spannungsvervielfachers stellt eine besonders einfache und zuverlässige Möglichkeit dar, die erfindungsgemäß vorgesehenen unterschiedlichen Eingangsspannungen bereitzustellen. Aufbau und Kosten einer entsprechenden Vorrichtung bzw. elektrischen Schaltung können dadurch entsprechend einfach bzw. niedrig gehalten werden.

Es ist außerdem von Vorteil, wenn die Spannungsquelle einen Wechselspannungsgenerator zur Erzeugung einer Wechselspannung aufweist. Vorzugsweise umfasst die Spannungsquelle außerdem einen Transformator oder eine Drossel, durch welchen bzw. welche die vom Wechselspannungsgenerator erzeugte Wechselspannung transformiert in den Spannungsvervielfacher eingekoppelt wird. Hierdurch wird auf einfache und zuverlässige Weise eine Transformation der ursprünglich erzeugten Wechselspannung, die in den Spannungsvervielfacher eingekoppelt wird, erreicht. Durch Verwendung einer Drossel anstelle eines Transformators wird der Wirkungsgrad der Schaltung noch weiter verbessert.

Vorzugsweise ist mindestens eine Filtereinrichtung zur Filterung zumindest einer der Eingangsspannungen vorgesehen. Insbesondere wird mit der Filtereinrichtung die erste Eingangsspannung gefiltert. Die übrigen, insbesondere niedrigeren, Eingangsspannungen werden vorzugsweise im Spannungsvervielfacher nur grob vorgesiebt und durch die aktiven Widerstandselemente, insbesondere Transistoren, aktiv gefiltert. Bei der Filtereinrichtung handelt es sich vorzugsweise um einem Tiefpassfilter, welcher niederfrequente Spannungsanteile durchlässt und höherfrequente Spannungsanteile herausfiltert. Insbesondere ist die Filtereinrichtung als Emitterfolgerschaltung aufgebaut. Auf diese Weise können einige und in der Regel teure Filterbauteile entfallen, was die Gesamtschaltung einfacher, kompakter und preisgünstiger macht.

Gemäß einer bevorzugten Variante der Erfindung werden nur diejenigen Elektroden des Photomultipliers mit einer hohen Eingangsspannung versorgt, welche zur Verstärkung der Sekundärelektronen wirklich diese hohe Spannung benötigen. Niedrigere Spannungen dagegen können einem "niedrigeren" Ausgang des Spannungsvervielfachers entnommen werden. Dann fließt bei den hohen Spannungen wenig Strom und bei den niedrigeren Spannungen mehr Strom. Auf diese Weise fließt bei der hohen Spannung nicht mehr - wie bei aus dem Stand der Technik bekannten Schaltungen - der Gesamtstrom, so dass der Wirkungsgrad der Spannungsversorgung deutlich erhöht wird.

Verwendet man die direkten Ausgänge des Spannungsvervielfachers zur Versorgung des Photomultipliers, dann ist vorzugsweise vor jeder Dynode ein leistungsfähiges Filternetzwerk vorgesehen, um die Restwelligkeit der Spannungen zu unterdrücken.

Um die Schaltung weiter zu vereinfachen, ist vorgesehen, von der maximalen Eingangsspannung über Widerstände die benötigten Teilspannungen in der Weise abzuleiten, dass mit lediglich zwei Hochspannungs-Transistoren die niedrigeren Spannungen aktiv gesiebt werden können. Eine solche Schaltung braucht insgesamt weniger Bauteile als ein klassischer aktiver Spannungsteiler und ist in ihrer Wirkung mit diesem vergleichbar.

Da bei dieser Ausführung bei der maximalen Hochspannung nur ein sehr kleiner Strom fließt, kann man diese Spannung mit einem viel kleineren Filter ausreichend gut sieben. Die niedrigeren Hochspannungen werden vorteilhafterweise im Spannungsvervielfacher nur ganz grob vorgesiebt und anschließend durch die Transistoren des Spannungsteilers aktiv gefiltert. Dadurch fallen einige teure Filterbauteile weg, und die Gesamtschaltung wird einfacher und kostengünstiger. Es wird darüber hinaus weniger Platz auf dem Layout benötigt, was wegen der erforderlichen Sicherheitsabstände aufgrund der Hochspannung von Vorteil ist.

Zusammengefasst liegen die Vorteile der beschriebenen Weiterbildungen der Erfindung in einer besseren Filterung mit weniger Bauteilen, einer Ersparnis einiger teurer Hochspannungs-Kondensatoren und -Transistoren, einer Vereinfachung des Spannungsvervielfachers sowie einer Platzersparnis für das Hochspannungsteil und den Spannungsteiler.

Weitere Vorteile, Merkmale und Anwendungsmöglichkeiten der vorliegenden Erfindung ergeben sich aus der nachfolgenden Beschreibung in Zusammenhang mit den Figuren. Es zeigen:
- Fig. 1: eine Vorrichtung zum Auslesen einer Speicherleuchtstoffschicht;
- Fig. 2: a) ein Beispiel einer elektrischen Schaltung zur Beschaltung des Photomultipliers; b) ein Beispiel für eine alternative Ausgestaltung der elektrischen Schaltung; und
- Fig. 3: ein Beispiel eines Filters zur aktiven Filterung der ersten Eingangsspannung.

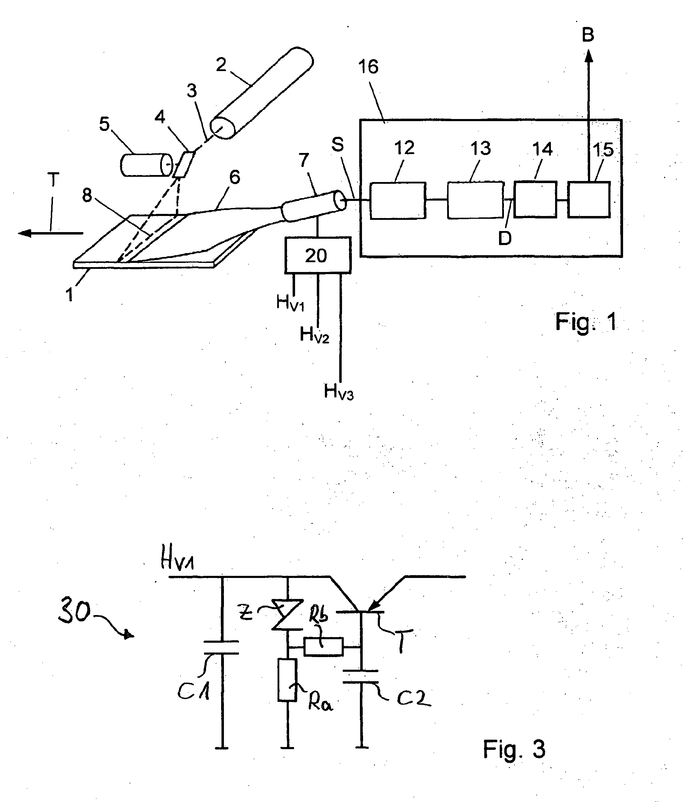

Fig. 1 zeigt eine Vorrichtung zum Auslesen einer Speicherleuchtstoffschicht 1. Durch einen Laser 2 wird ein Stimulationslichtstrahl 3 erzeugt, welcher durch ein von einem Motor 5 in Rotation versetztes Ablenkelement 4, insbesondere durch einen Polygonspiegel, derart abgelenkt wird, dass sich dieser entlang einer Zeile 8 über die auszulesende Speicherleuchtstoffschicht 1 bewegt. Anstelle eines rotierenden Polygonspiegels kann als Ablenkelement 4 auch ein um eine Achse oszillierender Spiegel, ein sog. Galvo, verwendet werden, der vorzugsweise in seiner Resonanzfrequenz oszilliert.

Während der Bewegung des Stimulationslichtstrahls 3 entlang der Zeile 8 sendet die Speicherleuchtstoffschicht 1 in Abhängigkeit der darin gespeicherten Röntgeninformation Emissionslicht aus, welches von einer optischen Sammeleinrichtung 6, beispielsweise einem Lichtleiterbündel, einem Lichtleiterblock aus Kunststoff oder Glas oder einer geeigneten Spiegeleinrichtung, gesammelt, weitergeleitet und von einem an die Sammeleinrichtung 6 gekoppelten Photomultiplier 7 erfasst und in ein entsprechendes analoges Detektorsignal S umgewandelt wird.

Der Photomultiplier 7, im Folgenden auch PMT genannt, umfasst im Wesentlichen eine Elektronenröhre mit einer Photokathode und einem nachgeschalteten Sekundärelektronenvervielfacher und ermöglicht eine Detektion und Verstärkung schwacher Lichtsignale - bis hin zu einzelnen Photonen - sowie deren Umwandlung in elektrische Signale.

Das Detektorsignal S wird einer Verarbeitungseinrichtung 16 zugeführt, in welcher Bildsignalwerte B für einzelne Bildpunkte des ausgelesenen Röntgenbildes abgeleitet werden. Durch einen Transport der Speicherleuchtstoffschicht 1 in Transportrichtung T wird ein sukzessives Auslesen einzelner Zeilen 8 erreicht und damit ein zweidimensionales, aus einzelnen Bildpunkten mit jeweils einem zugehörigen Bildsignalwert B bestehendes Röntgenbild erhalten.

Das analoge Detektorsignal S wird in dem hier dargestellten Ausführungsbeispiel zunächst durch ein Tiefpassfilter 12 gefiltert, wobei höherfrequente Anteile des Detektorsignals S, insbesondere Rauschanteile, eliminiert oder zumindest reduziert werden. Das gefilterte, analoge Detektorsignal S wird einer Digitalisierungseinrichtung 13 zugeführt und dort mit einer vorgegebenen Abtastfrequenz abgetastet und digitalisiert, wobei pro Abtastvorgang ein digitaler Detektorsignalwert D in digitalen Einheiten erhalten wird. Die Abtastfrequenz beträgt typischerweise 8 MHz, kann aber deutlich nach oben oder unten von diesem Wert abweichen und zwischen etwa 1 und 12 MHz liegen. Das Abtasten des analogen Detektorsignals S in der Digitalisierungseinrichtung 13 erfolgt vorzugsweise nach dem sog. Sample and Hold-Prinzip, bei welchem die jeweils aktuelle analoge Signalhöhe des zu einem Abtastzeitpunkt an der Digitalisierungseinrichtung 13 anliegenden Detektorsignals S gehalten und in einen entsprechenden digitalen Detektorsignalwert D umgewandelt wird.

Aus den in einem Speicher 14 zwischengespeicherten digitalen Detektorsignalwerten D werden schließlich in einer Recheneinheit 15 die einzelnen Bildsignalwerte B ermittelt, indem z.B. zwei oder mehrere Detektorsignalwerte D zu einem Bildpunkt zusammengefasst werden und daraus ― beispielsweise durch Mittelwertbildung ― ein zu diesem Bildpunkt gehörender Bildsignalwert B berechnet wird.

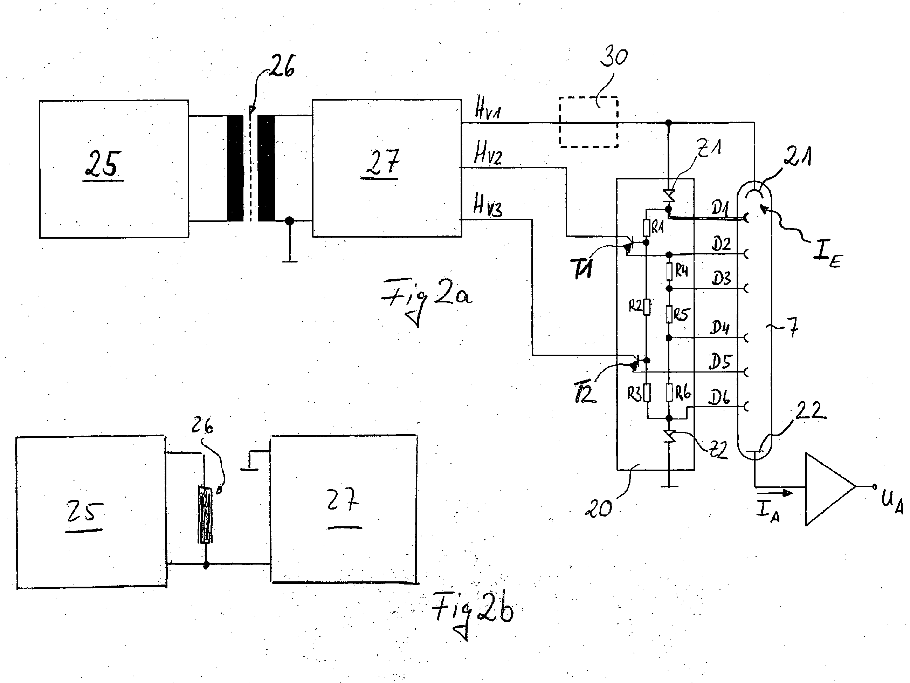

Dem PMT 7 werden über eine elektrische Schaltung 20, an welcher unterschiedlich große Eingangsspannungen H_{V1}, Hᵥ₂ und Hᵥ₃ anliegen, unterschiedlich hohe Teilspannungen zugeführt. Dies wird im Folgenden anhand eines in Fig. 2a gezeigten Beispiels näher erläutert.

Der PMT 7 umfasst eine Kathode 21, eine Anode 22 sowie mehrere Dynoden D1 bis D6. Im dargestellten Beispiel sind die sechs Dynoden, generell können aber auch Photomultiplier mit weniger oder mehr Dynoden verwendet werden.

Die Eingangsspannungen Hᵥ₁, Hᵥ₂ und Hᵥ₃, typischerweise zwischen 100 V und 2000 V und daher nachfolgend auch als Hochspannungen bezeichnet, liegen an der Kathode 21 an bzw. werden über einen Spannungsteiler, welcher Widerstände R1 bis R6, zwei Hochspannungs-Transistoren T1 und T2 sowie zwei Zener-Dioden Z1 und Z2 umfasst, auf die einzelnen Dynoden D1 bis D6 verteilt.

Wenn von der Speicherleuchtstoffschicht 1 ausgesandtes Emissionslicht einer bestimmten Intensität I_{E} in den PMT 7 eintritt, so werden in der Kathode 21 Photoelektronen erzeugt, welche entlang der Strecke der einzelnen Dynoden D1 bis D6 vervielfacht werden. Durch die Wahl der Eingangsspannungen H_{V1}, Hᵥ₂ und Hᵥ₃ sowie die Dimensionierung des Spannungsteilers, insbesondere der einzelnen Widerstände R1 bis R6, kann die Sekundärelektronenvervielfachung beeinflusst werden.

Eine Ausgangsspannung U_{A} des PMT 7 entspricht dem an der Anode 22 abgegriffen Strom I_{A}, der durch einen Operationsverstärker 23, dem vorzugsweise ein ohmscher Widerstand (nicht dargestellt) parallel geschaltet ist, in eine Ausgangsspannung U_{A} umgewandelt wird. Die Ausgangsspannung U_{A} entspricht dem im Zusammenhang mit Fig. 1 erwähnten analogen Detektorsignal S.

Mit einem Wechselspannungsgenerator 25 wird eine erste Wechselspannung erzeugt, welche in einem Transformator 26 in eine zweite Wechselspannung, die vorzugsweise größer ist als die erste Wechselspannung, umgewandelt wird und in einen Spannungsvervielfacher 27 eingekoppelt wird.

Bei einer in Fig. 2b gezeigten und besonders bevorzugten alternativen Ausgestaltung wird die mit dem Wechselspannungsgenerator 25 erzeugte Wechselspannung in einer Drossel 26 transformiert und in den Spannungsvervielfacher 27 eingekoppelt. Durch die Verwendung der Drossel 26 wird der Wirkungsgrad der Schaltung noch deutlicher verbessert.

Der Spannungsvervielfacher 27 ist eine Art Gleichrichter, der aus der anliegenden Wechselspannung unterschiedlich hohe pulsierende Gleichspannungen Hᵥ₁, Hᵥ₂ und Hᵥ₃ erzeugt, die höher sind als der Scheitelwert dieser Wechselspannung. Diese Gleichspannungen werden im Zusammenhang mit der vorliegenden Erfindung als Eingangsspannungen bezeichnet.

Bei dem Spannungsvervielfacher 27 handelt es sich beispielsweise um einen mehrstufigen Spannungsvervielfacher mit sog. Villard-Schaltungen, bei denen jeweils zwei Dioden und zwei Kondensatoren eine Schaltungsstufe bilden. Bei dieser Ausführung wird auf besonders einfache, zuverlässige und kostengünstige Weise eine Spannungsvervielfachung realisiert.

Eine erste Eingangsspannung Hᵥ₁ liegt an der Kathode 21 des PMT 7 an. Optional kann ein aktives Filter 30, das noch näher beschrieben wird, zur Filterung der ersten Eingangsspannung Hᵥ₁ vorgesehen sein.

Eine zweite Eingangsspannung Hᵥ₂ liegt am Kollektor eines ersten Transistors T1 an, dessen Emitter an eine zweite Dynode D2 angeschlossen ist und diese mit einer zweiten Teilspannung beaufschlagt. Der Emitter des ersten Transistors T1 ist ferner über Widerstände R4, R5 und R6 mit einer dritten, vierten und sechsten Dynode D3, D4 bzw. D6 gekoppelt und beaufschlagt diese mit einer entsprechenden dritten, vierten bzw. sechsten Teilspannung.

Mit der Basis des ersten Transistors T1 ist die erste Eingangsspannung Hᵥ₁ über eine erste Zener-Diode Z1 und einen Widerstand R1 gekoppelt. Hierdurch kann die Größe des Widerstandes bzw. der Verstärkungsfaktor des ersten Transistors T1 durch die erste Eingangsspannung H_{V1} gesteuert werden.

Der Ausgang der ersten Zener-Diode Z1 wird nicht nur über den Widerstand R1 an die Basis des ersten Transistors T1, sondern auch an eine erste Dynode D1 gekoppelt. Dadurch wird zwischen der Kathode 21 und der ersten Dynode D1 eine im Wesentlichen konstante erste Teilspannung erzeugt, welche einen im Wesentlichen konstanten Verstärkungsfaktor zur Folge hat.

Eine dritte Eingangsspannung Hᵥ₃ liegt am Kollektor eines zweiten Transistors T2 an, dessen Emitter an eine fünfte Dynode D5 angeschlossen ist und diese mit einer fünften Teilspannung beaufschlagt. Die Basis des zweiten Transistors T2 ist über einen Widerstand R2 mit der Basis des ersten Transistors T1 gekoppelt, so dass ― analog zur Funktionsweise des ersten Transistors T1 ― auch der Widerstand bzw. Verstärkungsfaktor des zweiten Transistors T2 durch die erste Eingangsspannung Hᵥ₁ gesteuert werden kann.

Die Basis des zweiten Transistors T2 ist ferner über einen Widerstand R3 an den Ausgang des Widerstandes R6 und die sechste Dynode D6 gekoppelt sowie über eine zweite Zener-Diode Z2 auf Massepotenzial gelegt.

Durch die beschriebene Verschaltung der Eingänge der elektrischen Schaltung 20 wird erreicht, dass die unterschiedlichen Eingangsspannungen Hᵥ₁, Hᵥ₂ und Hᵥ₃ auf die für eine möglichst lineare Verstärkung erforderlichen Teilspannungen an den jeweiligen Dynoden D1 bis D6 verteilt werden. D.h. es werden sechs unterschiedliche Teilspannungen aus drei unterschiedlichen Eingangsspannungen erzeugt.

Bei der Ableitung der Teilspannungen an der zweiten, dritten, vierten und sechsten Dynode D2, D3, D4 bzw. D6 aus der zweiten Eingangsspannung H_{V2} wird zusätzlich die erste Eingangsspannung H_{V1} herangezogen, indem diese den Widerstand des ersten Transistors T1 steuert.

Bei der Ableitung der Teilspannung an der fünften Dynode D5 aus der dritten EingangsspannungHᵥ₃ wird ebenfalls zusätzlich die erste Eingangsspannung H_{V1} herangezogen, indem diese den Widerstand des zweiten Transistors T2 steuert.

Im gezeigten Beispiel betragen die bevorzugten absoluten Werte für die erste, zweite und dritte Eingangsspannung H_{V1}, Hᵥ₂ und H_{V3} 1000 V, 800 V bzw. 320 V.

Fig. 3 zeigt ein Beispiel eines Filters 30 zur aktiven Filterung der ersten Eingangsspannung Hᵥ₁. Der Filter 30 ist vorzugsweise als Tiefpassfilter ausgestaltet, welcher niederfrequente Anteile der Eingangsspannung passieren lässt und höherfrequente Anteile blockiert. Der Filter 30 ist außerdem vorzugsweise als sog. Emitterfolger ausgestaltet.

Die Eingangsspannung H_{V1} liegt an einem ersten Kondensator C1 an, welcher mit seinen anderen Ende auf Massepotenzial liegt. Dazu parallel sind eine Zener-Diode Z und ein ohmscher Widerstand Ra geschaltet. Der Ausgang der Zener-Diode Z und der Eingang des Widerstandes Ra sind über einen weiteren ohmschen Widerstand Rb mit der Basis eines Transistors T gekoppelt, an dessen Kollektor ebenfalls die erste Eingangsspannung Hᵥ₁ anliegt. Die Basis des Transistors T ist außerdem über einen zweiten Kondensator C2 auf Massepotenzial gelegt. Am Emitter des Transistors T kann dann die gefilterte erste Eingangsspannung Hᵥ₁ abgegriffen und an die Kathode 21 des PMT 7 bzw. an die erste Zener-Diode Z1 der elektrischen Schaltung 20 (siehe Fig. 2a) angelegt werden.

Durch den aktiven Filter 30 wird auf einfache und kostengünstige Weise eine aktive Filterung der ersten Eingangsspannung Hᵥ₁ ermöglicht, so dass ein stabiler Spannungsabfall zwischen der Kathode 21 und der ersten Dynode D1 und damit eine sehr stabile Grundverstärkung des PMT 7 erreicht wird. Darüber hinaus wird durch die Filterung und Glättung der ersten Eingangsspannung Hᵥ₁ ein besonders zuverlässiges Steuern der ― bezüglich der zweiten und dritten Eingangsspannung Hᵥ₂ bzw. Hᵥ₃ ebenfalls aktiv filternd wirkenden ― ersten und zweiten Transistoren T1 und T2 ermöglicht.

Durch die beschriebene erfindungsgemäße Einkopplung unterschiedlich großer Eingangsspannungen Hᵥ₁, Hᵥ₂ und H_{V3} in den Spannungsteiler 20 werden die jeweils auftretenden Ströme und damit etwaige Verlustleistungen deutlich reduziert. Aufgrund der niedrigeren Ströme ist es darüber hinaus möglich, eine Filterung der Eingangsspannungen H_{V1}, Hᵥ₂ und H_{V3} durch relativ einfach aufgebaute aktive Filter zu realisieren.

## Patentansprüche

1. Photomultipliermodul (7, 20) mit einem Photomultiplier (7) und einer elektrischen Schaltung (20) zur Beschaltung des Photomultipliers (7), welcher zum Erfassen von Licht und zum Umwandeln des erfassen Lichts in ein Ausgangssignal (I_{A}, U_{A}) ausgebildet ist und eine oder mehrre Elektroden (21, D1 - D6) aufweist, mit einem Spannungsteiler (20) zur Erzeugung unterschiedlicher Teilspannungen, mit welchen die Elektroden (21, D1 - D6) beaufschlagt werden, aus zwei oder mehreren unterschiedlichen Eingangsspannungen (H_{V1}, H_{V2}, H_{V3}), welche am Spannungsteiler (20) anliegen,
**dadurch gekennzeichnet, dass**
der Spannungsteiler (20) mindestens ein Widerstandselement (T1, T2) aufweist, dessen elektrischer Widerstand durch die Höhe einer ersten Eingangsspannung (H_{V1}), welche an der Kathode (21) des Photomultipliers (7) anliegt, derart gesteuert wird, dass über das Widerstandselement (T1, T2) mindestens eine von der ersten Eingangsspannung (H_{V1}) verschiedene zweite Eingangsspannung (H_{V2} bzw. H_{V3}) in Abhängigkeit von der Höhe der anliegenden ersten Eingangsspannung (H_{V1}) zumindest einer der Elektroden (D2, D3, D4, D6 bzw. D5) zugeführt wird.

2. Vorrichtung zum Auslesen von in einer Speicherleuchtstoffschicht (1) gespeicherten Röntgeninformationen mit
- einer Bestrahlungseinrichtung (2, 4, 5) zum Bestrahlen der Speicherleuchtstoffschicht (1) mit Stimulationslicht (3), welches die Speicherleuchtstoffschicht (1) zur Aussendung von Emissionslicht anregen kann, und
- einem Photomultipliermodul (7, 20) nach Anspruch 1, wobei der Photomultiplier (7) zum Erfassen zumindest eines Teils des angeregten Emissionslichts und zum Umwandeln des erfassten Emissionslichts in ein Ausgangssignal (I_{A}, U_{A}) ausgebildet ist.

3. Vorrichtung nach Anspruch 2, wobei die mindestens eine zweite Eingangsspannung (H_{V2}, H_{V3}) kleiner ist als die erste Eingangsspannung (H_{V1}).

4. Vorrichtung nach Anspruch 2 oder 3 mit einer Spannungsquelle (25, 26, 27) zur Erzeugung der zwei oder mehreren unterschiedlichen Eingangsspannungen (H_{V1}. H_{V2}, H_{V3}), die am Spannungsteiler (20) anliegen.

5. Vorrichtung nach Anspruch 4, wobei die Spannungsquelle (25, 26, 27) einen Spannungsvervielfacher (27) aufweist, welcher eine Wechselspannung in die zwei oder mehreren unterschiedlichen Eingangsspannungen (H_{V1}, H_{V2}, H_{V3}) umwandelt.

6. Vorrichtung nach Anspruch 4 oder 5, wobei die Spannungsquelle (25, 26, 27) einen Wechselspannungsgenerator (25) zur Erzeugung einer ersten Wechselspannung aufweist.

7. Vorrichtung nach Anspruch 5 und 6, wobei die Spannungsquelle (25, 26, 27) einen Transformator (26) oder eine Drossel (26) aufweist, durch zwelchen bzw. welche die vom Wechseispannungsgenerator (25) erzeugte Wechselspannung, die in den Spannungsvervielfacher (27) eingekoppelt wird, transformiert wird.

8. Vorrichtung nach einem der Ansprüche 2 bis 7 mit mindestens einer Filtereinrichtung (30) zur Filterung zumindest einer der Eingangsspannungen (H_{V1}, H_{V2}, H_{V3}).

## Claims

1. Photomultiplier module (7, 20) comprising a photomultiplier (7) and an electrical circuit (20) for connecting the photomultiplier (7), which is designed for detecting light and for converting the detected light into an output signal (I_{A}, U_{A}) and which comprises one or more electrodes (21, D1 - D6), with a voltage divider (20) for generating different sub-voltages, which are applied to the electrodes (21, D1 - D6), from one or more different input voltages (H_{V1}, H_{V2}, H_{V3}) which are applied at the voltage divider (20),
**characterized in that**
the voltage divider (20) comprises at least one resistor element (T1, T2), the electrical resistance of which is controlled by the height of a first input voltage (H_{V1}), which is applied to the cathode (21) of the photomultiplier (7), in such a way that, as a function of the height of the applied first input voltage (H_{V1}), at least one second input voltage (respectively H_{V2} or H_{V3}), which is different from the first input voltage (H_{V1}), is applied to at least one of the electrodes (respectively D2, D3, D4, D6 or D5) by means of the resistor element (T1, T2).

2. Device for reading out X-ray information stored in a storage phosphor layer (1), comprising
- an irradiation device (2, 4, 5) for irradiating the storage phosphor layer (1) with stimulating light (3), which is able to stimulate the storage phosphor layer (1) to emit emission light, and
- a photomultiplier module (7, 20) according to claim 1, wherein the photomultiplier (7) is designed to detect at least a part of the stimulated emission light and to convert the detected emission light into an output signal (I_{A}, U_{A}).

3. Device according to claim 2, wherein the at least one second input voltage (H_{V2}, H_{V3}) is lower than the first input voltage (H_{V1}).

4. Device according to claim 2 or 3 comprising a voltage source (25, 26, 27) for generating the two or more different input voltages (H_{V1}, H_{V2}, H_{V3}) which are applied to the voltage divider (20).

5. Device according to claim 4, wherein the voltage source (25, 26, 27) comprises a voltage multiplier (27), which converts an alternating voltage into the two or more different input voltages (H_{V1}, H_{V2}, H_{V3}).

6. Device according to claim 4 or 5, wherein the voltage source (25, 26, 27) comprises an alternating voltage generator (25) for generating a first alternating voltage.

7. Device according to claim 5 and 6, wherein the voltage source (25, 26, 27) comprises a transformer (26) or an inductor (26) for transforming the alternating voltage which is generated by the alternating voltage generator (25) and which is injected into the voltage multiplier (27).

8. Device according to any of claims 2 to 7, comprising at least one filtering device (30) for filtering at least one of the input voltages (H_{V1}, H_{V2}, H_{V3}).

## Revendications

1. Module de photomultiplicateur (7, 20) comprenant un photomultiplicateur (7) et un circuit électrique (20) servant à connecter le photomultiplicateur (7), qui est conçu de façon à détecter de la lumière et à convertir la lumière détectée en un signal de sortie (I_{A}, U_{A}) et qui comprend une ou plusieurs électrodes (21, D1 - D6), à un diviseur de tension (20) servant à générer différentes tensions partielles appliquées aux électrodes (21, D1 - D6) à partir d'une ou de plusieurs tensions d'entrée différentes (H_{V1}, H_{V2}, H_{V3}) appliquées au diviseur de tension (20),
**caractérisé en ce que**
le diviseur de tension (20) comprend au moins un élément de résistance (T1, T2) dont la résistance électrique est contrôlée par la hauteur d'une première tension d'entrée (H_{V1}), appliquée à la cathode (21) du photomultiplicateur (7), de façon à ce que l'élément de résistance (T1, T2) permette d'appliquer au moins une deuxième tension d'entrée (respectivement H_{V2} ou H_{V3}), qui est différente de la première tension d'entrée (H_{V1}), à au moins une des électrodes (respectivement D2, D3, D4, D6 ou D5) en fonction de la hauteur de la première tension d'entrée (H_{V1}) appliquée.

2. Dispositif servant à lire les informations radiographiques stockées dans une couche luminescente à mémoire (1), comprenant
- un dispositif d'irradiation (2, 4, 5) servant à irradier la couche luminescente à mémoire (1) avec de la lumière de stimulation (3) qui est capable de stimuler la couche luminescente à mémoire (1) afin de la faire émettre de la lumière d'émission, et
- un module de photomultiplicateur (7, 20) selon la revendication 1, **caractérisé en ce que** le photomultiplicateur (7) est conçu de façon à détecter au moins une partie de la lumière d'émission stimulée et à convertir la lumière d'émission détectée en un signal de sortie (I_{A}, U_{A}).

3. Dispositif selon la revendication 2, **caractérisé en ce que** ladite au moins une deuxième tension d'entrée (H_{V2}, H_{V3}) est inférieure à la première tension d'entrée (H_{V1}).

4. Dispositif selon la revendication 2 ou 3 comprenant une source de tension (25, 26, 27) servant à générer lesdites deux ou plusieurs tensions d'entrée différentes (H_{V1}, H_{V2}, H_{V3}) appliquées au diviseur de tension (20).

5. Dispositif selon la revendication 4, **caractérisé en ce que** la source de tension (25, 26, 27) comprend un multiplicateur de tension (27) convertissant une tension alternative en lesdites deux ou plusieurs tensions d'entrée différentes (H_{V1}, H_{V2}, H_{V3}).

6. Dispositif selon la revendication 4 ou 5, **caractérisé en ce que** la source de tension (25, 26, 27) comprend un générateur de tension alternative (25) servant à générer une première tension alternative.

7. Dispositif selon la revendication 5 et 6, **caractérisé en ce que** la source de tension (25, 26, 27) comprend un transformateur (26) ou un inducteur (26) servant à transformer la tension alternative générée par le générateur de tension alternative (25) et injectée dans le multiplicateur de tension (27).

8. Dispositif selon l'une quelconque des revendications 2 a 7, comprenant au moins un dispositif de filtrage (30) servant à filtrer au moins une des tensions d'entrée (H_{V1}, H_{V2}, H_{V3}).
